# EUROPEAN PATENT APPLICATION

(11) **EP 4 530 868 A1**
(43) Date of publication of application: **02.04.2025**
(21) Application number: 23878864.0
(22) Date of filing: 11.09.2023
(51) Int. Cl.: G06F 13/12, G06F 13/376

(54) **COMPUTING DEVICE AND DATA ACQUISITION METHOD**

(30) Priority: 21.10.2022 CN 202211292395
(71) Applicant: xFusion Digital Technologies Co., Ltd., Zhengzhou, Henan 450000 (CN)
(72) Inventor: YUAN, Xusheng, Zhengzhou, Henan 450000 (CN); WANG, Binfeng, Zhengzhou, Henan 450000 (CN); LV, Xuan, Zhengzhou, Henan 450000 (CN)
(74) Representative: MERH-IP Matias Erny Reichl Hoffmann Patentanwälte PartG mbB
(86) International application number: PCT/CN2023/118030
(87) International publication number: WO 2024/082870

(57) **Abstract**

Embodiments of this application disclose a computing device. The computing device includes a plurality of computing nodes, a plurality of component units, and a control unit. The control unit includes a plurality of first interfaces and at least one second interface, each computing node is connected to one first interface, and the at least one second interface is electrically connected to the component units. The control unit is configured to obtain management information and store the management information. The management information includes either or both of component working information of each component unit and node working information of each computing node. The computing node is configured to send a query request to the control unit, and obtain management information corresponding to the query request from the control unit. **In** this manner, related information of the nodes and the component units can be conveniently stored and exchanged in the computing device.

## Description

This application claims priority to Chinese Patent Application No. 202211292395.8, filed with the China National Intellectual Property Administration on October 21, 2022 and entitled "COMPUTING DEVICE AND DATA OBTAINING METHOD", which is incorporated herein by reference in its entirety.

### TECHNICAL FIELD

This application relates to the field of computing devices, and in particular, to a computing device and a data obtaining method.

### BACKGROUND

For a computing device (such as a high-density server or a blade server) in which a plurality of computing nodes share a chassis, each computing node has a baseboard management controller (BaseBoard Management Controller, BMC). When the BMCs of the plurality of computing nodes need to read related information of components, such as a hard disk and a fan, that are disposed on the computing device, the plurality of computing nodes may obtain information from the components at the same time or in a short time period. This causes a multi-master and multi-slave conflict.

### SUMMARY

Embodiments of this application provide a computing device and a data obtaining method, to conveniently store and exchange related information of nodes and component units in the computing device.

According to a first aspect, an embodiment of this application provides a computing device. The computing device includes a plurality of computing nodes, a plurality of component units, and a control unit, the control unit includes a plurality of first interfaces and at least one second interface, each of the computing nodes is connected to one of the first interfaces, and the at least one second interface is electrically connected to the component units.

The control unit is configured to obtain management information and store the management information, where the management information includes either or both of component working information of each component unit and node working information of each computing node.

The computing node is configured to send a query request to the control unit, and obtain management information corresponding to the query request from the control unit.

Further, the control unit includes a complex programmable logic device CPLD.

Further, the CPLD is integrated on a circuit board of one of the component units.

Further, each of the computing nodes includes a baseboard management controller BMC and a network interface, and the computing node receives the query request through the network interface, and sends the query request to the control unit; and/or
the computing node receives the management information corresponding to the query request from the control unit by the BMC.

Further, the control unit includes a plurality of register areas, and the control unit is configured to obtain the management information, and store the obtained management information in register areas corresponding to each component unit and/or each computing node.

Further, the control unit includes a plurality of second interfaces, and each second interface is configured to obtain component working information of at least one component unit.

Further, the component units include any one or more of a fan, a power supply, a hard disk, a mounting ear unit, or a sensor.

According to a second aspect, an embodiment of this application provides a data obtaining method, applied to a control unit. The control unit is disposed in a computing device, the computing device further includes a plurality of computing nodes and a plurality of component units, and the plurality of computing nodes and the plurality of component units are electrically connected to the control unit. The method includes:
obtaining management information, and storing the management information, where the management information includes either or both of component working information of each component unit and node working information of each computing node; and
receiving a query request sent by any computing node, and obtaining management information corresponding to the query request in response to the query request.

Further, the control unit includes a plurality of register areas. The method further includes:
obtaining the management information, and storing the obtained management information in register areas corresponding to each component unit and/or each computing node.

Further, the method further includes:
obtaining component working information from an object component unit in each component unit based on a preset periodicity corresponding to each the component unit, and storing the component working information in a register area corresponding to the object component unit.

Further, the method further includes:
successively obtaining component working information from the component units based on a component access sequence, and storing the component working information in register areas corresponding to the component units.

Further, the query request carries to-be-queried data information, the to-be-queried data information includes to-be-queried object information and/or to-be-queried content information, and the to-be-queried object information includes to-be-queried component information and/or to-be-queried computing node information. The method further includes:
determining, based on the to-be-queried object information, one or more register areas corresponding to the to-be-queried object information; and
reading stored node working information and/or component working information from the one or more register areas in response to the query request; and/or
reading stored node working information and/or component working information corresponding to the to-be-queried content information from the one or more register areas in response to the query request.

Further, the query request further carries a priority identifier, and the to-be-queried object information includes the to-be-queried component information. The method further includes:
obtaining component working information of a to-be-queried component corresponding to the to-be-queried component information from the to-be-queried component based on the priority identifier carried in the query request, and feeding back the obtained component working information of the to-be-queried component to the computing node that sends the query request.

Further, the query request further carries a query periodicity. The method further includes:
obtaining the management information corresponding to the query request based on the query periodicity, and feeding back the obtained management information to the computing node that sends the query request.

According to a third aspect, an embodiment of this application provides a chip. The chip is disposed in a computing device, the computing device includes a plurality of computing nodes, a plurality of component units, and a control unit, the control unit includes a plurality of first interfaces and at least one second interface, and each of the computing nodes is connected to one of the first interfaces. The at least one second interface is electrically connected to the component units. The chip is configured to execute the method according to the second aspect.

The computing device provided in embodiments of this application includes a plurality of computing nodes, a plurality of component units, and a control unit. The control unit includes a plurality of first interfaces and at least one second interface, and each computing node is connected to one first interface. The at least one second interface is electrically connected to the component units. The control unit is configured to obtain management information and store the management information. The management information includes either or both of component working information of each component unit and node working information of each node. The computing node is configured to send a query request to the control unit, and obtain management information corresponding to the query request from the control unit. In this manner, related information of the nodes and the component units can be conveniently stored and exchanged in the computing device.

### BRIEF DESCRIPTION OF DRAWINGS

FIG. 1 is a schematic diagram of a structure of a computing device according to an embodiment of this application;
FIG. 2 is a schematic diagram of a structure of another computing device according to an embodiment of this application;
FIG. 3 is a schematic diagram of a structure of still another computing device according to an embodiment of this application;
FIG. 4 is a schematic diagram of a structure of still another computing device according to an embodiment of this application;
FIG. 5 is a schematic flowchart of a data obtaining method according to an embodiment of this application; and
FIG. 6 is a schematic diagram of a structure of a control unit according to an embodiment of this application.

### DESCRIPTION OF EMBODIMENTS

The following clearly describes the technical solutions in embodiments of this application with reference to the accompanying drawings in the embodiments of this application. Clearly, the described embodiments are merely some rather than all of the embodiments of this application. Based on the embodiments of this application, all other embodiments obtained by a person of ordinary skill in the art without creative efforts fall within the protection scope of this application.

An embodiment of this application provides a computing device. The computing device includes a plurality of computing nodes, a plurality of component units, and a control unit. The control unit includes a plurality of first interfaces and at least one second interface, and each computing node is connected to one first interface. The at least one second interface is electrically connected to each component unit, and the at least one second interface includes one or more second interfaces. In some embodiments, when a CPLD includes a plurality of second interfaces, one second interface may be electrically connected to one component unit. In another embodiment, one second interface may be electrically connected to a group of component units, where the group of component units includes a plurality of (that is, two or more) component units. Each second interface is configured to obtain component working information of at least one component unit.

In some embodiments, the control unit may be a complex programmable logic device (Complex Programming logic device, CPLD), the CPLD has a feature of processing tasks in parallel, and the CPLD may include a plurality of first interfaces and one or more second interfaces. In some embodiments, each component unit may include but is not limited to any one or more of a fan, a power supply, a hard disk, a mounting ear unit, a sensor, or the like. The mounting ear unit is configured to mount an external device. For example, the mounting ear unit may be a USB interface, configured to connect to a USB flash drive, a headset, a charger, or the like.

In some embodiments, the CPLD may be integrated into a circuit board of any one of the component units. For example, if a component unit is a fan, the CPLD may be integrated into a circuit board of the fan. Integrating the CPLD into a circuit board of any one of the component units can help reduce costs and improve density of the whole computing device. In another embodiment, the CPLD may alternatively be a circuit board that is independent of each component unit and each computing node.

In an embodiment, the control unit may be configured to obtain management information and store the management information. The management information includes either or both of component working information of each component unit and node working information of each node. In some embodiments, the component working information may include but is not limited to any one or more of fan working information, power supply working information, hard disk working information, mounting ear unit working information, sensor working information, or the like. In some embodiments, the fan working information may include but is not limited to information such as a speed, a direction, rotation duration, and shaking of the fan. The power supply working information may include but is not limited to information such as a voltage, a current, and a resistance of the power supply. The hard disk working information may include but is not limited to information such as a capacity of the hard disk and a remaining capacity of the hard disk. The mounting ear unit working information may include working information of an external device mounted on the mounting ear unit, such as a capacity of a USB flash drive. The sensor working information may include but is not limited to information such as a temperature, humidity, a pressure, and a position.

Further, the control unit may include a plurality of register areas, and each register area is used to store management information, that is, component working information of each component unit and/or node working information of each computing node. Each register area may be a register. The control unit may obtain management information by a logic module, and store the obtained management information in register areas corresponding to each component unit and/or each computing node. In some embodiments, different register areas may be used to store different management information, and same management information may be stored in a plurality of register areas. The different management information may include component working information of different component units, or may include node working information of different computing nodes, or may include component working information and node working information. The same management information may be component working information of a same component unit, or may be node working information of a same computing node.

Further, each computing node may be configured to send a query request to the control unit, and obtain management information corresponding to the query request from the control unit. In some embodiments, each computing node may include a BMC and a network interface. The computing node may receive a query request through the network interface, and send the query request to the control unit; and/or receive management information corresponding to the query request from the control unit by the BMC. In some embodiments, the query request may be sent by a terminal device through the network interface.

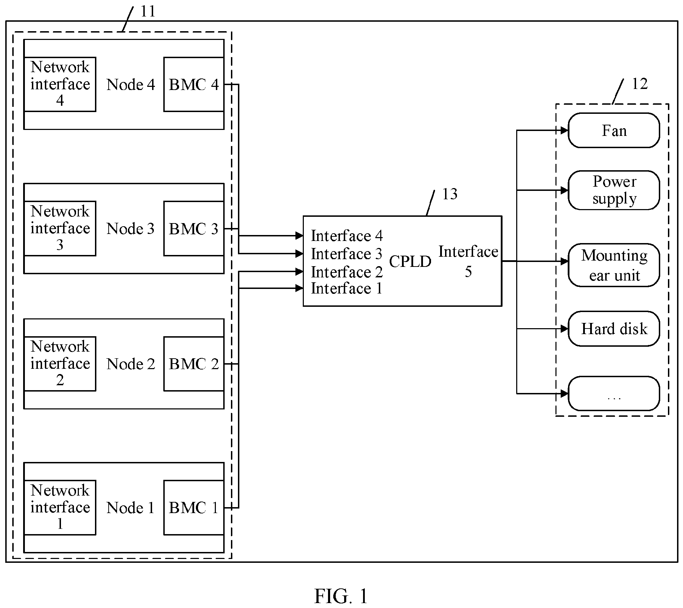

The following provides a schematic description of the computing device provided in embodiments of this application with reference to FIG. 1 to FIG. 4.

FIG. 1 is a schematic diagram of a structure of a computing device according to an embodiment of this application. FIG. 1 provides a schematic description of a structure in which a control unit in the computing device includes one second interface. The computing device includes a computing node 11, a component unit set 12, and the control unit 13. The computing node 11 includes but is not limited to a computing node 1, a computing node 2, a computing node 3, and a computing node 4, and the component unit set 12 includes but is not limited to a plurality of component units such as a fan, a power supply, a mounting ear unit, and a hard disk. The control unit 13 may be a CPLD, and the CPLD includes a plurality of first interfaces and one second interface.

Further, the first interface may include but is not limited to an I2C interface, and the second interface may include but is not limited to an I2C interface. Each computing node includes a BMC and a network interface. For example, the computing node 1 includes a BMC 1 and a network interface 1, the computing node 2 includes a BMC 2 and a network interface 2, the computing node 3 includes a BMC 3 and a network interface 3, and the computing node 4 includes a BMC 4 and a network interface 4. The computing node 1 is connected to the CPLD by an interface 1 in the first interfaces, the computing node 2 is connected to the CPLD by an interface 2 in the first interfaces, the computing node 3 is connected to the CPLD by an interface 3 in the first interfaces, and the computing node 4 is connected to the CPLD by an interface 4 in the first interfaces. The CPLD is connected to the component units in the component unit set 12 by an interface 5 that serves as the second interface.

In some embodiments, each first interface is configured to transfer node working information of each computing node to the CPLD, and transfer node working information and component working information that are stored in the CPLD to each computing node. The second interface is configured to transfer component working information of each component unit to the CPLD. A network interface of each computing node is configured to transmit data information of the computing node and a terminal device outside the computing device. For example, the network interface is configured to transmit a query request sent by a user by an external terminal device, and the query request is used to request to obtain management information and the like.

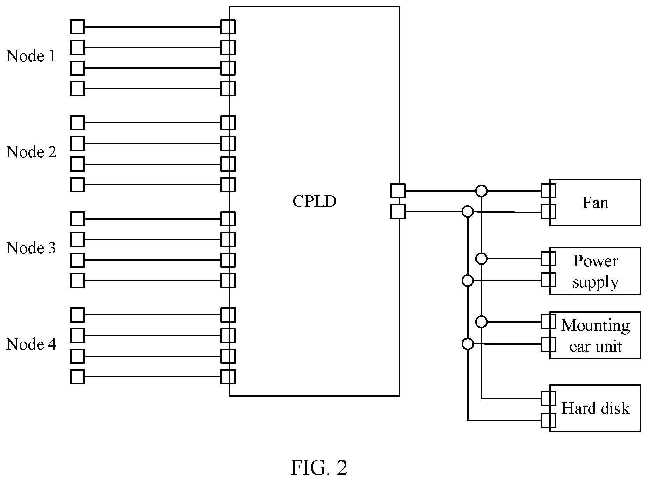

FIG. 2 is a schematic diagram of a structure of another computing device according to an embodiment of this application. As shown in FIG. 2, FIG. 2 provides a further description of the structure of the computing device in FIG. 1. A CPLD includes four first interfaces and one second interface. The four first interfaces are four I2C interfaces, and the second interface is also an I2C interface. A computing node 1, a computing node 2, a computing node 3, and a computing node 4 are respectively connected to the four first interfaces of the CPLD, and the second interface is connected to I2C interfaces of a plurality of component units. Each component unit may include but is not limited to a temperature sensor such as LM75, a mounting ear unit, a fan, a hard disk, a power supply, or the like.

When the computing node 1 is connected to the first interface of the CPLD, a clock signal pin of an I2C interface of a BMC of the computing node 1 may be connected to a clock signal pin of an I2C interface of the computing node 1 of the CPLD, and a data pin of the I2C interface of the BMC of the computing node 1 is connected to a data pin of the I2C interface of the computing node 1 of the CPLD.

When the computing node 2 is connected to the first interface of the CPLD, a clock signal pin of an I2C interface of a BMC of the computing node 2 may be connected to a clock signal pin of an I2C interface of the computing node 2 of the CPLD, and a data pin of the I2C interface of the BMC of the computing node 2 is connected to a data pin of the I2C interface of the computing node 2 of the CPLD.

Similarly, a manner of connecting the computing node 3 to the first interface of the CPLD and a manner of connecting the computing node 4 to the first interface of the CPLD are the same as the manner of connecting the computing node 1 and the computing node 2 to the first interfaces of the CPLD. Details are not described herein again.

When the second interface of the CPLD is connected to the interface of each component unit, a serial clock pin of the I2C interface of the CPLD may be connected to serial clock pins of the I2C interface of each component unit, and a data pin of the I2C interface of the CPLD is connected to data pins of the I2C interface of each component unit.

An R101 bleeder resistor is disposed on each of a circuit connecting the serial clock pin of the I2C interface of the CPLD and the serial clock pins of the I2C interface of each component unit and a circuit connecting the data pin of the I2C interface of the CPLD and the data pins of the I2C interface of each component unit, to prevent electric shock.

The CPLD may obtain component working information of each component unit by the second interface and/or obtain node working information of each computing node by the first interfaces, and store the obtained component working information and/or node working information in register areas in the CPLD that are corresponding to the component working information and/or the node working information, so that the BMC in each computing node can synchronously obtain node working information of another computing node and/or the component working information of each component from the register areas of the CPLD through a first interface connected to the computing node.

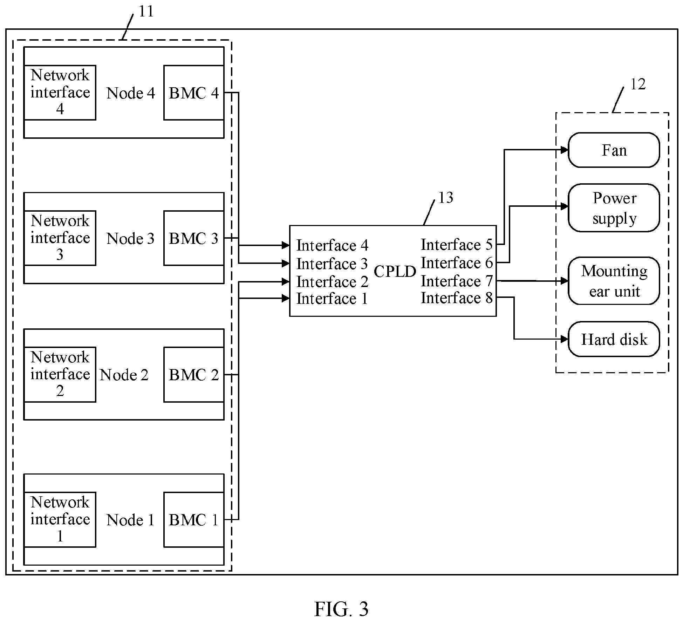

FIG. 3 is a schematic diagram of a structure of still another computing device according to an embodiment of this application. FIG. 3 provides a schematic description of a structure in which a control unit in the computing device includes a plurality of second interfaces and each second interface is connected to one component unit. The computing device includes a computing node 11, a component unit set 12, and the control unit 13. The computing node 11 includes but is not limited to a computing node 1, a computing node 2, a computing node 3, and a computing node 4, and the component unit set 12 includes but is not limited to a plurality of components such as a fan, a power supply, a mounting ear unit, and a hard disk. The control unit 13 may be a CPLD. The CPLD includes a plurality of first interfaces and a plurality of second interfaces. Each first interface is connected to one corresponding computing node, and each second interface is connected to one corresponding component unit.

Further, each computing node includes a BMC and a network interface. For example, the computing node 1 includes a BMC 1 and a network interface 1, the computing node 2 includes a BMC 2 and a network interface 2, the computing node 3 includes a BMC 3 and a network interface 3, and the computing node 4 includes a BMC 4 and a network interface 4. The computing node 1 is connected to the CPLD by an interface 1 in the first interfaces, the computing node 2 is connected to the CPLD by an interface 2 in the first interfaces, the computing node 3 is connected to the CPLD by an interface 3 in the first interfaces, and the computing node 4 is connected to the CPLD by an interface 4 in the first interfaces. The CPLD is connected to the fan in the component unit set 12 by an interface 5 in the second interfaces, the CPLD is connected to the power supply in the component unit set 12 by an interface 6 in the second interfaces, the CPLD is connected to the mounting ear unit in the component unit set 12 by an interface 7 in the second interfaces, and the CPLD is connected to the hard disk in the component unit set 12 by an interface 8 in the second interfaces.

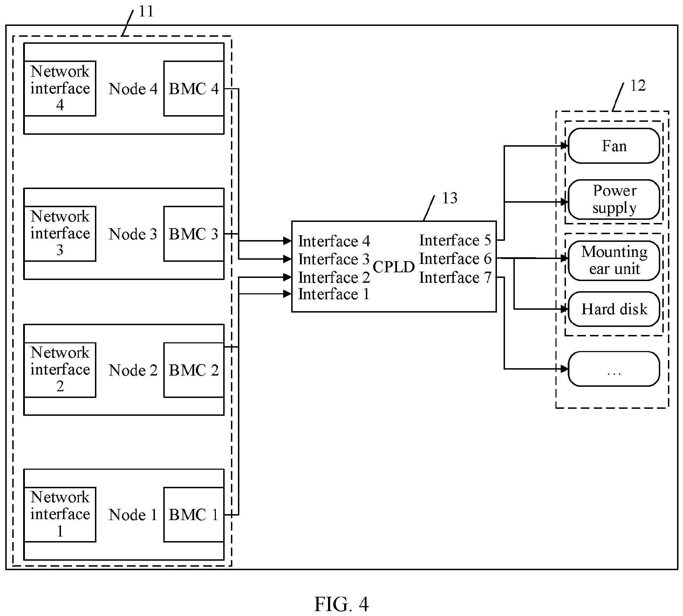

FIG. 4 is a schematic diagram of a structure of still another computing device according to an embodiment of this application. FIG. 4 provides a schematic description of a structure in which a control unit in the computing device includes a plurality of second interfaces, each second interface is connected to one group of component units, and each component unit includes one or more components. The computing device includes a computing node 11, a component unit set 12, and the control unit 13. The computing node 11 includes but is not limited to a computing node 1, a computing node 2, a computing node 3, and a computing node 4. The component unit set 12 includes a plurality of component unit groups, namely a component unit group 1, a component unit group 2, and a component unit group 3. The component unit group 1 includes a fan and a power supply, the component unit group 2 includes a mounting ear unit and a hard disk, and the component unit group 3 includes other component units. The control unit 13 may be a CPLD. The CPLD includes a plurality of first interfaces and a plurality of second interfaces. Each first interface is connected to one corresponding computing node, and each second interface is connected to one corresponding group of component units. One or more component units are included in one group of component units.

Further, each computing node includes a BMC and a network interface. For example, the computing node 1 includes a BMC 1 and a network interface 1, the computing node 2 includes a BMC 2 and a network interface 2, the computing node 3 includes a BMC 3 and a network interface 3, and the computing node 4 includes a BMC 4 and a network interface 4. The computing node 1 is connected to the CPLD by an interface 1 in the first interfaces, the computing node 2 is connected to the CPLD by an interface 2 in the first interfaces, the computing node 3 is connected to the CPLD by an interface 3 in the first interfaces, and the computing node 4 is connected to the CPLD by an interface 4 in the first interfaces. The CPLD is connected to the component unit group 1 by an interface 5 in the second interfaces, the CPLD is connected to the component unit group 2 by an interface 6 in the second interfaces, and the CPLD is connected to the component unit group 3 by an interface 7 in the second interfaces.

By these several structural manners, the component working information of each component unit and/or the node working information of each computing node can be obtained more efficiently. This helps the computing device control the computing device and perform troubleshooting more efficiently and flexibly based on the obtained component working information and/or node working information.

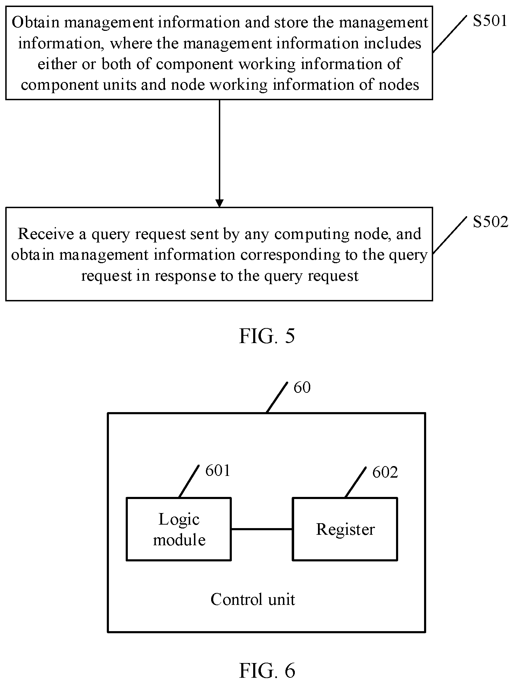

With reference to FIG. 5, the following provides a schematic description of a data obtaining method provided in an embodiment of this application.

Specifically, refer to FIG. 5. FIG. 5 is a schematic flowchart of a data obtaining method according to an embodiment of this application. The data obtaining method in this embodiment of this application may be applied to a control unit. The control unit is disposed in a computing device. The computing device further includes a plurality of computing nodes and a plurality of component units. The control unit includes a plurality of first interfaces and at least one second interface, each computing node is connected to one first interface, and the at least one second interface is electrically connected to each component unit. Specifically, the method in this embodiment of this application includes the following steps.

S501: Obtain management information and store the management information, where the management information includes either or both of component working information of each component unit and node working information of each node.

In this embodiment of this application, the control unit may obtain the management information, and store the management information. The management information includes either or both of the component working information of each component unit and the node working information of each node.

In an embodiment, the control unit may include a logic module and a plurality of register areas. The control unit may obtain management information by the logic module, and store the obtained management information in register areas corresponding to each component unit and/or each computing node.

In some embodiments, a correspondence among the register areas, each component unit, and each computing node may be predefined in the computing device, so that register areas corresponding to different component unit and/or different computing node can be subsequently determined based on the correspondence to store the management information.

Further, different register areas may be used to store different node working information and/or component working information. For example, a register area 1 is used to store component working information of a component unit 1, and a register area 2 is used to store node working information of a computing node 1. In another embodiment, in some scenarios, there may be a case in which a volume of component working information of one component unit is greater than a capacity of one register area, and a plurality of register areas are needed to store the component working information of the component unit. Therefore, a plurality of register areas may be used to store component working information of a same component unit or node working information of a same computing node. For example, both a register area 2 and a register area 3 are used to store component working information of a component unit 2.

In an embodiment, the control unit may obtain component working information from an object component unit in the component units based on a preset periodicity, and store the component working information in a register area corresponding to the object component unit. In some embodiments, a preset periodicity may be separately set for each component unit, and periodicity separately set foreach component unit may be the same, or may be different.

In an implementation, when the control unit includes a plurality of second interfaces and one second interface is electrically connected to one component unit, periodicity that is preset separately for the component units may be the same, and the control unit may synchronously obtain component working information of each component unit from each component unit by each second interface. In this manner, the component working information of the component units can be obtained synchronously, which helps improve efficiency of obtaining the component working information.

In another implementation, when the control unit includes one second interface, periodicity that is preset separately foreach component unit may be different, and the control unit may obtain component working information of each component unit from each component unit by the second interface based on the different preset periodicity of each component unit. In this manner, component working information of a plurality of component units is not obtained simultaneously by one second interface, and the component working information can be automatically and periodically obtained. This helps improve flexibility of obtaining the component working information.

Specifically, FIG. 1 may be used as an example for description. It is assumed that the component units are the fan, the power supply, the mounting ear unit, and the hard disk, the preset periodicity is different periodicity separately set for each component unit, and are respectively t1, t2, t3, and t4, and the control unit is a CPLD. In this case, the CPLD may obtain fan working information from the fan when the periodicity t1 arrives. If it is determined, based on a preset correspondence between each storage area and a component unit, that the fan corresponds to a register area 1, the fan working information may be stored in the register area 1 corresponding to the fan. When the periodicity t2 arrives, the CPLD may obtain power supply working information from the power supply. If it is determined, based on the preset correspondence between each register area and a component unit, that the power supply corresponds to a register area 2, the power supply working information may be stored in the register area 2 corresponding to the power supply. Similarly, when the periodicity t3 arrives, the CPLD may obtain mounting ear working information of the mounting ear unit, and store the mounting ear working information in a register area 3 corresponding to the mounting ear unit. Further, when the periodicity t4 arrives, the CPLD may obtain hard disk working information of the hard disk, and store the hard disk working information in a register area 4 corresponding to the hard disk.

In an embodiment, the control unit may successively obtain component working information from each component unit based on a component access sequence, and store the component working information in register areas corresponding to each component unit. In some embodiments, the component access sequence may be customized in advance when the CPLD is being developed.

In an implementation, a periodicity may be preset for all the component units, and the control unit may successively obtain component working information from each component unit based on the component access sequence in the periodicity, and store the component working information in register areas corresponding to each component unit.

Further, after the control unit obtains component working information from a component unit in the component access sequence in the periodicity, and stores the component working information in a register area corresponding to the component unit, the control unit may obtain component working information of another component unit following the component unit in the component access sequence from the another component unit, and store the component working information in a register area corresponding to the another component unit.

Specifically, FIG. 1 may be used as an example for description. It is assumed that the component access sequence is successively: the fan, the power supply, the mounting ear unit, and the hard disk, the periodicity that is set for all the component units is 2s, and the control unit is a CPLD. In the periodicity of 2 seconds, the CPLD may first obtain fan working information from the fan. If it is determined, based on a preset correspondence between each register area and a component unit, that the fan corresponds to a register area 1, the fan working information may be stored in the register area 1 corresponding to the fan. Then, the CPLD may obtain power supply working information from the power supply. If it is determined, based on the preset correspondence between each register area and a component unit, that the power supply corresponds to a register area 2, the power supply working information may be stored in the register area 2 corresponding to the power supply. Similarly, the CPLD may then obtain mounting ear working information of the mounting ear unit, and store the mounting ear working information in a register area 3 corresponding to the mounting ear unit. Further, the CPLD may obtain hard disk working information of the hard disk, and store the hard disk working information in a register area 4 corresponding to the hard disk.

In an embodiment, the control unit may store the obtained node working information of each computing node in register areas corresponding to each computing node. In some embodiments, each computing node is connected to the control unit by a corresponding first interface. Therefore, the control unit may simultaneously obtain the node working information of each computing node by different first interface, and store the node working information in the register areas corresponding to each computing node. In this manner, the control unit can synchronously obtain the node working information of each computing node, which helps improve efficiency of obtaining the node working information by the control unit.

Further, the control unit may obtain the node working information of each computing node by each first interface, and determine, based on a preset correspondence between a computing node and a register area, the register areas corresponding to each computing node, so as to store the node working information of each computing node in the register areas corresponding to each computing node. For example, the CPLD may store obtained node working information of the computing node 1 in a register area 2 corresponding to the computing node 1.

S502: Receive a query request sent by any computing node, and obtain management information corresponding to the query request in response to the query request.

In this embodiment of this application, the control unit may receive a query request sent by any computing node, and obtain management information corresponding to the query request in response to the query request. Further, the control unit may simultaneously obtain, by different first interfaces, query requests sent by a plurality of computing nodes, and obtain management information corresponding to the query requests in response to the query requests. In this manner, efficiency and flexibility of obtaining the management information from the control unit by each computing node are improved.

In an embodiment, the query request carries to-be-queried data information, the to-be-queried data information includes to-be-queried object information, and the to-be-queried object information includes to-be-queried component information and/or to-be-queried computing node information. The control unit may determine, based on the to-be-queried object information, one or more register areas corresponding to the to-be-queried object information, and read stored node working information and/or component working information from the one or more register areas in response to the query request. In some embodiments, the to-be-queried component information may include but is not limited to a component identifier, and the to-be-queried computing node information may include but is not limited to a node identifier.

For example, if the control unit receives a query request sent by a computing node 2, and to-be-queried object information carried in the query request includes an identifier of a component 1 and an identifier of the computing node 1, the control unit may obtain component working information of the component 1 from a register area 3 corresponding to the component 1, obtain node working information of the computing node 1 from a register area 1 corresponding to the computing node 1, and feed back the component working information of the component 1 and the node working information of the computing node 1 to the node 2.

In an embodiment, the query request carries to-be-queried data information, the to-be-queried data information includes to-be-queried object information and to-be-queried content information, and the to-be-queried object information includes to-be-queried component information and/or to-be-queried computing node information. The control unit may determine, based on the to-be-queried object information, one or more register areas corresponding to the to-be-queried object information, and read stored node working information and/or component working information corresponding to the to-be-queried content information from the one or more register areas in response to the query request. In some embodiments, the to-be-queried content information may include but is not limited to time information, a to-be-queried content identifier, and the like, and is used to indicate to query specified content information in a specified time range and the like.

For example, if the control unit receives a query request sent by a computing node 3, to-be-queried object information carried in the query request includes an identifier of a component 2 and an identifier of the computing node 2, and to-be-queried content information includes a time range [t1, t2], the control unit may obtain component working information of the component 2 in the time range [t1, t2] from a register area 4 corresponding to the component 2, and obtain node working information of the computing node 2 in the time range [t1, t2] from a register area 5 corresponding to the computing node 2.

In an embodiment, the query request further carries a priority identifier, and the to-be-queried object information includes to-be-queried component information. The control unit may obtain component working information of a to-be-queried component corresponding to the to-be-queried component information from the to-be-queried component based on the priority identifier carried in the query request, and feed back the obtained component working information of the to-be-queried component to the computing node that sends the query request. In some embodiments, the priority identifier is used to indicate to preferentially obtain component working information of a component unit. In another embodiment, the priority identifier may be used to indicate to preferentially obtain node working information of a computing node. In this manner, flexibility of obtaining component working information and/or node working information is further improved.

For example, if the priority identifier carried in the query request is used to indicate to preferentially obtain power supply working information, the control unit may interrupt a current operation and obtain the power supply working information from the power supply, and feed back the power supply working information to the computing node that sends the query request.

In an implementation, a user may send a query request that carries a priority identifier to a computing node by a terminal device, so that the computing node sends the query request that carries the priority identifier to the control unit, so as to preferentially obtain component working information of a component unit corresponding to the priority identifier.

In an embodiment, the query request further carries a query periodicity, and the control unit may obtain management information corresponding to the query request based on the query periodicity, and feed back the obtained management information to the computing node that sends the query request. In this manner, the computing node can periodically and continuously obtain management information by sending only one query request, thereby improving efficiency of obtaining management information.

In an embodiment, each computing node may obtain a query request sent by a terminal device, and send the query request to the control unit when obtaining the query request, so that the control unit can feed back management information requested by the query request, that is, node working information and/or component working information, to the computing node. Further, each computing node may generate display information based on the node working information and/or the component working information, and feed back the display information to the terminal device. In some embodiments, the display information may be the management information, or may be information indicating the management information.

In this embodiment of this application, the control unit obtains the component working information of each component unit and stores the component working information in the register areas corresponding to each component unit, and synchronously obtains and stores the node working information of each computing node, so that each computing node can synchronously obtain the component working information of each component unit and/or the node working information of each computing node. This improves efficiency and flexibility of obtaining data of the computing device, and helps more efficiently and flexibly control the computing device and perform troubleshooting based on the obtained data.

Please refer to Figure 6. FIG. 6 is a schematic diagram of a structure of a control unit according to an embodiment of this application. Specifically, the control unit 60 is disposed in a computing device, the computing device further includes a plurality of computing nodes and a plurality of component units, and the plurality of computing nodes and the plurality of component units are electrically connected to the control unit.

The control unit 60 is configured to obtain management information and store the management information, where the management information includes either or both of component working information of each component unit and node working information of each node; and
receive a query request sent by any computing node, and obtain management information corresponding to the query request in response to the query request.

Further, the control unit 60 includes a logic module 601 and a plurality of register areas, and each register area is a register 602. The control unit 60 is further configured to: obtain the management information by the logic module 601, and store the obtained management information in register areas corresponding to each component unit and/or each computing node.

Further, the control unit 60 is further configured to:
obtain component working information from an object component unit in the component units based on a preset periodicity corresponding to each of the component units, and store the component working information in a register area corresponding to the object component unit.

Further, the control unit 60 is further configured to:
successively obtain component working information from each component unit based on a component access sequence, and store the component working information in register areas corresponding to each component unit.

Further, the query request carries to-be-queried data information, the to-be-queried data information includes to-be-queried object information and/or to-be-queried content information, and the to-be-queried object information includes to-be-queried component information and/or to-be-queried computing node information. The control unit 60 is further configured to:
determine, based on the to-be-queried object information, one or more register areas corresponding to the to-be-queried object information; and
read stored node working information and/or component working information from the one or more register areas in response to the query request; and/or
read stored node working information and/or component working information corresponding to the to-be-queried content information from the one or more register areas in response to the query request.

Further, the query request further carries a priority identifier, and the to-be-queried object information includes to-be-queried component information. The control unit 60 is further configured to:
obtain component working information of a to-be-queried component corresponding to the to-be-queried component information from the to-be-queried component based on the priority identifier carried in the query request, and feed back the obtained component working information of the to-be-queried component to the computing node that sends the query request.

Further, the query request further carries a query periodicity. The control unit 60 is further configured to:
obtain management information corresponding to the query request based on the query periodicity, and feed back the obtained management information to the computing node that sends the query request.

In this embodiment of this application, the control unit may obtain the component working information of each component unit and store the component working information in the register areas corresponding to each component unit, and synchronously obtain and store the node working information of each computing node, so that each computing node can synchronously obtain the component working information of each component unit and the node working information of each computing node. This improves efficiency and flexibility of obtaining data of the computing device, and helps more efficiently and flexibly control the computing device and perform troubleshooting based on the obtained data.

An embodiment of this application further provides a chip. The chip is disposed in a computing device. The computing device further includes a plurality of computing nodes, a plurality of component units, and a control unit. The control unit includes a plurality of first interfaces and at least one second interface. Each of the computing nodes is connected to one of the first interfaces. The at least one second interface is electrically connected to the component units. The chip is configured to perform the method described in the embodiment corresponding to FIG. 5. Details are not described herein again.

A person skilled in the art may further learn that various illustrative logical blocks (illustrative logical block) and steps (step) listed in the embodiments of this application may be implemented by electronic hardware, computer software, or a combination thereof. Whether the function is implemented through hardware or software depends on specific applications and overall system design requirements. A person skilled in the art may use various methods to implement the described functions for each particular application, but it should not be considered that the implementation goes beyond the protection scope of the embodiments of this application.

This application further provides a computer-readable storage medium, on which a computer program is stored. The computer program includes program instructions, and when the program instructions are executed by a computer, the function of any one of the foregoing method embodiments is implemented.

The foregoing computer-readable storage medium includes but is not limited to a flash memory, a hard disk, and a solid state disk.

This application further provides a computer program product, and when the computer program product is executed by a computer, the function of any one of the foregoing method embodiments is implemented.

The solutions described in this application may be implemented in various manners. For example, these technologies may be implemented in a manner of hardware, software, or a hardware combination. For hardware implementation, a processing unit that executes a related technology of the foregoing method may be implemented in one or more general-purpose processors, digital signal processors (digital signal processor, DSP), digital signal processing devices, application specific integrated circuits (application specific integrated circuit, ASIC), programmable logic devices, field programmable gate arrays (field programmable gate array, FPGA), or other programmable logic apparatuses, discrete gates or transistor logic devices, discrete hardware components, or any combination of the foregoing. The general-purpose processor may be a microprocessor, and optionally, the general-purpose processor may be any conventional processor, controller, microcontroller, or state machine. The processor may alternatively be implemented by a combination of computing apparatuses, such as a digital signal processor and a microprocessor, a plurality of microprocessors, one or more microprocessors combined with a digital signal processor core, or any other similar configuration.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions described in embodiments of this application are completely or partially generated. The computer instructions may be stored in a computer-readable storage medium, or transmitted from a computer-readable storage medium to another computer-readable storage medium.

In this application, an element described in a singular form is intended to represent "one or more" instead of "one and only one", unless otherwise specified. In this application, "a plurality of" is intended to represent "two or more", unless otherwise specified.

In addition, in this specification, the term "and/or" merely describes an association relationship between associated objects, and indicates that there may be three relationships, for example, A and/or B may indicate three cases: Only A exists, both A and B exist, and only B exists. A and B each may be singular or plural.

In this application, "preset" (for example, "preset periodicity") may be understood as defined, predefined, stored, pre-stored, pre-negotiated, pre-configured, cured, or pre-burned.

A person of ordinary skill in the art may understand that, for convenience and brevity of description, for a specific working process of the foregoing computing device and unit, refer to a corresponding process in the foregoing method embodiments. Details are not described herein again.

For same or similar parts of the embodiments in this application, refer to each other. In the embodiments of this application and the implementations/implementation methods in the embodiments, if no special description or logical conflict exists, terms and/or descriptions in the different embodiments and the implementations/implementation methods in the embodiments are consistent and may be mutually referenced, and technical characteristics in the different embodiments and the implementations/implementation methods in the embodiments may be combined to form a new embodiment, implementation, or implementation method according to an inherent logical relationship. The foregoing implementations of this application do not constitute a limitation on the protection scope of this application.

## Claims

1. A computing device, wherein the computing device comprises a plurality of computing nodes, a plurality of component units, and a control unit, the control unit comprises a plurality of first interfaces and at least one second interface, each of the computing nodes is connected to one of the first interfaces, and the at least one second interface is electrically connected to the component units;
the control unit is configured to obtain management information and store the management information, wherein the management information comprises either or both of component working information of each component unit and node working information of each computing node; and
the computing node is configured to send a query request to the control unit, and obtain management information corresponding to the query request from the control unit.

2. The computing device according to claim 1, wherein the control unit comprises a complex programmable logic device CPLD.

3. The computing device according to claim 2, wherein the CPLD is integrated on a circuit board of one of the component units.

4. The computing device according to claim 1, wherein each of the computing nodes comprises a baseboard management controller BMC and a network interface, and the computing node receives the query request by the network interface, and sends the query request to the control unit; and/or
the computing node receives the management information corresponding to the query request from the control unit by the BMC.

5. The computing device according to any one of claims 1 to 4, wherein the control unit comprises a plurality of register areas, and the control unit is configured to obtain the management information, and store the obtained management information in register areas corresponding to each component units and/or each computing node.

6. The computing device according to claim 1, wherein the control unit comprises a plurality of second interfaces, and each second interface is configured to obtain component working information of at least one component unit.

7. A data obtaining method, applied to a control unit, wherein the control unit is disposed in a computing device, the computing device further comprises a plurality of computing nodes and a plurality of component units, and the plurality of computing nodes and the plurality of component units are electrically connected to the control unit; and the method comprises:
obtaining management information, and storing the management information, wherein the management information comprises either or both of component working information of each component unit and node working information of each computing node; and
receiving a query request sent by any computing node, and obtaining management information corresponding to the query request in response to the query request.

8. The method according to claim 7, wherein the control unit comprises a plurality of register areas, and the method further comprises:
obtaining the management information, and storing the obtained management information in register areas corresponding to each component unit and/or each computing node.

9. The method according to claim 8, wherein the method further comprises:
obtaining component working information from an object component unit in the component units based on a preset periodicity corresponding to each of the component units, and storing the component working information in a register area corresponding to the object component unit.

10. The method according to claim 8, wherein the method further comprises:
successively obtaining component working information from the component units based on a component access sequence, and storing the component working information in register areas corresponding to each component unit.

11. The method according to claim 7, wherein the query request carries to-be-queried data information, the to-be-queried data information comprises to-be-queried object information and/or to-be-queried content information, and the to-be-queried object information comprises to-be-queried component information and/or to-be-queried computing node information; and the method further comprises:
determining, based on the to-be-queried object information, one or more register areas corresponding to the to-be-queried object information; and
reading stored node working information and/or component working information from the one or more register areas in response to the query request; or
reading stored node working information and/or component working information corresponding to the to-be-queried content information from the one or more register areas in response to the query request.

12. The method according to claim 11, wherein the query request further carries a priority identifier, and the to-be-queried object information comprises the to-be-queried component information; and the method further comprises:
obtaining component working information of a to-be-queried component corresponding to the to-be-queried component information from the to-be-queried component based on the priority identifier carried in the query request, and feeding back the obtained component working information of the to-be-queried component to the computing node that sends the query request.

13. The method according to claim 7, wherein the query request further carries a query periodicity, and the method further comprises:
obtaining the management information corresponding to the query request based on the query periodicity, and feeding back the obtained management information to the computing node that sends the query request.
